# EUROPÄISCHE PATENTANMELDUNG

(11) **EP 4 663 995 A1**
(43) Veröffentlichungstag der Anmeldung: **17.12.2025**
(21) Anmeldenummer: 24020196.2
(22) Anmeldetag: 12.06.2024
(51) Int. Cl.: F17C 5/04, F04B 5/02, F04B 15/08, F04B 23/02

(54) **VORRICHTUNG ZUR DRUCKERHÖHUNG EINES VERFLÜSSIGTEN GASES**

(71) Anmelder: Linde GmbH, 82049 Pullach (DE)
(72) Erfinder: Brücklmeier, Martin, 82049 Pullach (DE); Lachermeier, Armin, 82049 Pullach (DE); Schäfer, Simon, 82049 Pullach (DE); Schanda, Lukas, 82049 Pullach (DE); Huber, Michael, 82049 Pullach (DE)
(74) Vertreter: Zahn, Christoph

(57) **Zusammenfassung**

Es werden eine Vorrichtung zur Druckerhöhung eines verflüssigten Gases sowie eine Wasserstofftankstelle, die eine derartige Vorrichtung aufweist, beschrieben.

## Beschreibung

Die Erfindung betrifft eine Vorrichtung zur Druckerhöhung eines verflüssigten Gases, aufweisend
- einen Pumpenbehälter, der wenigstens eine Zuführleitung für das verflüssigte Gas aufweist,
- wobei der Flüssigkeitsstand im Pumpenbehälter und der im Pumpenbehälter herrschende Druck regelbar sind,
- eine Hochdruckleitung, über die das verdichtete Gas aus dem Pumpenbehälter abgeführt wird, und
- einen in dem Pumpenbehälter angeordneten, wenigstens zweistufig ausgebildeten Pumpeneinsatz,
- dessen Stufen jeweils einen Kolben und jeweils eine Verdichtungskammer aufweisen, und
- wobei die Kolbenbewegungen oszillierend erfolgen.

Ferner betrifft die Erfindung eine Wasserstofftankstelle mit einer derartigen Vorrichtung.

Das Betanken von Fahrzeugen mit gasförmigem Wasserstoff (H₂) erfolgt durch ein Überströmen von der Anlagenseite bzw. Wasserstofftankstelle in den Fahrzeugtank auf Druckniveaus von bis zu 700 bar. Tankstellenseitig muss der Wasserstoff deshalb mittels einer Druckerhöhungseinheit auf Drücke von bis zu 900 bar komprimiert werden. Liegt der Wasserstoff in der Tankstelle in flüssiger Form (LH₂) vor, kann er mittels einer Kryo- bzw. Flüssiggaskolbenpumpe auf bis zu 900 bar verdichtet werden. Hierzu ist über ein kommunizierendes System von Zu- und Rücklaufleitungen ein Pumpenbehälter direkt an den für die Speicherung des flüssigen Wasserstoffs erforderlichen Speicherbehälter angeschlossen. Im Pumpenbehälter wird LH₂ ebenfalls vorgelagert, wobei der Füllstand im Pumpenbehälter regelbar ist. In diesem Pumpenbehälter ist ein Pumpeneinsatz angeordnet. Dieser wird von einem Hydraulikaggregat angetrieben und stellt die Druckerhöhungseinheit des Systems dar.

Die Speichertemperatur des LH₂ liegt bei -20 K. Um ein Abdampfen des LH₂ zu vermeiden, müssen die vorgenannten Anlagenkomponenten thermisch isoliert werden, um den Wärmeeintrag auf den LH₂ so gering wie möglich zu halten. Da eine ideale Isolierung physikalisch nicht möglich ist, kommt es unvermeidbar zu dauerhaften Abdampfverlusten im System. Das abdampfende Gas wird nachfolgend als BOG (Boil-Off-Gas) bezeichnet. Die Menge der Abdampfverluste hängt von der Güte der thermischen Isolierung des Gesamtsystems ab. Um eine sicherheitsgerichtete Druckkonstanthaltung im System zu gewährleisten, wird das BOG über einen Kamin in die Atmosphäre entlassen. Das anfallende BOG bedeutet für Tankstellenbetreiber jedoch einen nicht unerheblichen Kostenfaktor, da dieses Gas nicht vertankt werden kann.

Aufgabe der vorliegenden Erfindung ist es, eine gattungsgemäße Vorrichtung zur Druckerhöhung eines verflüssigten Gases anzugeben, die das Abblasen des BOG in die Atmosphäre reduziert, im besten Falle überflüssig macht, und so die BOG-Verluste an Wasserstofftankstellen mit LH₂-Speicherung und Verdichtung mittels Kryopumpe veringert.

Zur Lösung dieser Aufgabe wird eine Vorrichtung zur Druckerhöhung eines verflüssigten Gases vorgeschlagen, die dadurch gekennzeichnet ist, dass
- in dem Pumpenbehälter eine Leitung angeordnet ist, die den Kopfraum des Pumpenbehälters mit der Verdichtungskammer der ersten Stufe verbindet,
- in der Leitung ein Rückschlagventil angeordnet ist,
- wobei das Rückschlagventil derart ausgebildet ist, dass es öffnet, sobald in der Verdichtungskammer, der Druck geringer ist als der im Pumpenbehälter herrschende Druck,
- eine weitere, die Verdichtungskammern verbindende Leitung angeordnet ist,
- in der weiteren Leitung ein Rückschlagventil angeordnet ist, und
- der oder die Kolben über eine gemeinsame Kolbenstange mechanisch bewegt und die Bewegung synchronisiert ist.

Vorgeschlagen wird ferner eine Wasserstofftankstelle, die wenigstens eine erfindungsgemäße Vorrichtung zur Druckerhöhung eines verflüssigten Gases aufweist.

Weitere vorteilhafte Ausgestaltungen der erfindungsgemäßen Vorrichtung zur Druckerhöhung eines verflüssigten Gases sind dadurch gekennzeichnet, dass
- der Kolben von einem Hydraulikaggregat und/oder einem Elektromotor angetrieben wird,
- der Pumpenbehälter, die Zuführleitung, die Hochdruckleitung und/oder der Pumpeneinsatz gegen die Umgebung thermisch isoliert ausgebildet sind, und
- der Pumpeneinsatz derart ausgebildet ist, dass er das verflüssigte Gas auf einen Druck bis 1000 bar verdichtet.

Anhand des in der **Figur** dargestellten Ausführungsbeispiels seien die erfindungsgemäße Vorrichtung zur Druckerhöhung eines verflüssigten Gases, insbesondere von verflüssigtem Wasserstoff, sowie weitere vorteilhafte Ausgestaltungen dieser Vorrichtung nachfolgend beschrieben.

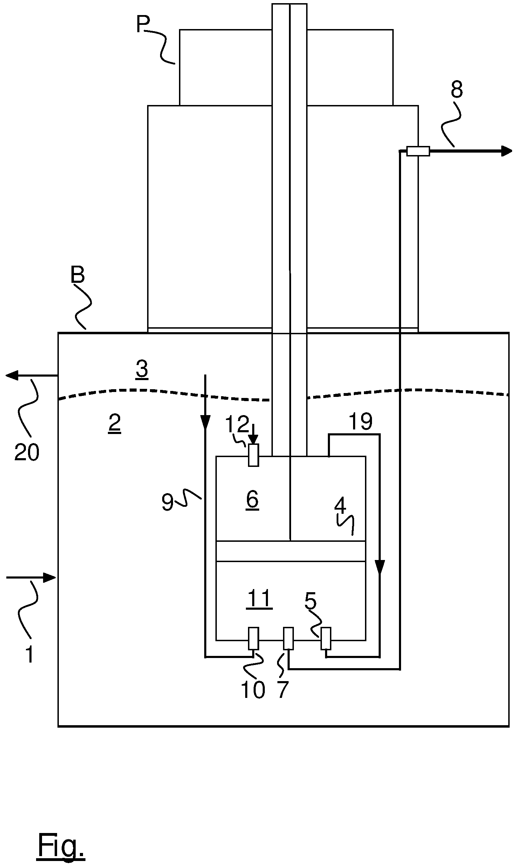

Die erfindungsgemäße Vorrichtung zur Druckerhöhung eines verflüssigten Gases weist einen Pumpenbehälter B auf, der wenigstens eine Zuführleitung 1 für das verflüssigte Gas aufweist. Die Zuführleitung 1 ist bspw. mit dem, in der Figur nicht dargestellten LH₂-Speicherbehälter einer Wasserstofftankstelle verbunden. Über die Zuführleitung 1 wird der zu vertankende Wasserstoff dem Pumpenbehälter B und so dem darin angeordneten Pumpeneinsatz P zugeführt. Der Flüssigkeitsstand 2 im Pumpenbehälter B sowie der in ihm herrschende Druck sind regelbar. Über die Abführleitung 20 kann im Pumpenbehälter B entstehender gasförmiger Wasserstoff dem vorgenannten LH₂-Speicherbehälter wieder zugeführt werden.

Der Pumpeneinsatz P weist einen Kolben 4 und zwei Kolbenräume 6 und 11 auf. Er dient der Verdichtung des verflüssigten Gases bzw. Wasserstoffs auf den gewünschten Enddruck, bspw. auf 900 bar. Über eine Hochdruckleitung 8 wird das verdichtete Gas aus dem Pumpenbehälter B bzw. dem Pumpeneinsatz P abgeführt und vorzugsweise einem in der Figur nicht dargestellten Hochdruck-Speicherbehälter zugeführt, aus dem es in ein zu betankendes Fahrzeug überführt wird.

Der Kolben 4 wird vorzugsweise von einem in der Figur nicht dargestellten Hydraulikaggregat, bspw. einem Elektromotor angetrieben. Ferner sind der Pumpenbehälter B, die Zuführleitung 1, die Abführleitung 20, die Hochdruckleitung 8 und/oder der Pumpeneinsatz P gegen die Umgebung thermisch isoliert ausgebildet, um die Boil-off-Gas-Verluste so gering wie möglich zu halten.

In vorteilhafter Weise arbeiten Kryopumpen, wie sie in der Figur dargestellt sind, nach einem zweistufigem Verdichtungsprinzip. Hierbei wird flüssiger Wasserstoff über einen Einlass 12 in einer ersten Verdichtungskammer 6 vorverdichtet und unterkühlt über die weitere Leitung 19, in der ein erstes Rückschlagventil 5 angeordnet ist, in die zweite Verdichtungskammer 11 befördert. Der vorgenannte Einlass 12 kann ein Ventil aufweisen. In der zweiten Verdichtungskammer 11 wird der vorverdichtete Wasserstoff auf bis zu 900 bar verdichtet und über Leitung 8 durch ein zweites Rückschlagventil 7 in die nachfolgenden, in der Figur nicht dargestellten Anlagenkomponenten, bspw. einem Hochdruck-Speicherbehälter transferiert.

Die Komprimierung und die Füllung der jeweiligen Verdichtungsräume 6 und 11 erfolgt vorzugsweise gegenläufig. Während der Hochfahrbewegung des Kolbens 4 wird flüssiger Wasserstoff in der ersten Verdichtungskammer 6 verdichtet, während die zweite Verdichtungskammer 11 gefüllt wird. Während der Abwärtsbewegung des Kolbens 4 erfolgt die Füllung der ersten Verdichtungskammer über die Einlassleitung 12, während der vorverdichtete flüssige Wasserstoff in der zweiten Verdichtungskammer 11 weiter verdichtet und über Leitung 8 ausgeschoben wird. Da die Füllung der zweiten Verdichtungskammer 11 mit flüssigem Wasserstoff erst nach ca. 50 % des Hubes in der Hochfahrbewegung beginnt, geht dies mit einer isentropen Expansion in der zweiten Verdichtungskammer 11 bis zum Beginn der Füllung einher. Der nach dem Ausschiebevorgang im Totraum verbliebene überkritische Wasserstoff erfährt dadurch eine starke Abkühlung sowie eine Druckabsenkung unter den Systemdruck des Pumpenbehälters B. Durch die Regelung des Füllstandes im Pumpenbehälter B wird sichergestellt, dass die Kryopumpe stets mit flüssigem Wasserstoff beliefert wird. Zusätzlich befindet sich im Kopfraum 3 des Pumpenbehälters B immer gasförmiger Wasserstoff (GH₂).

Erfindungsgemäß ist nunmehr eine Leitung 9 vorgesehen, die den Kopfraum 3 mit der zweiten Verdichtungskammer 11 verbindet. In der Leitung 9 ist ebenfalls ein Rückschlagventil 10 angeordnet. Dieses ist derart ausgebildet, dass es öffnet, sobald der Druck in der zweiten Verdichtungskammer 11 geringer ist als der im Kopfraum 3 des Pumpenbehälters B herrschende Druck. Dies ist dann der Fall, wenn der Druck der zweiten Verdichtungskammer 11 durch die isentrope Expansion abfällt.

Bei geöffnetem Rückschlagventil 10 wird Boil-Off-Gas bzw. gasförmiger Wasserstoff aus dem Kopfraum 3 des Pumpenbehälters P in die zweite Verdichtungskammer 11 gesaugt. Mit Beginn des Transfers des vorverdichteten flüssigen Wasserstoffs über Leitung 19 aus der ersten Verdichtungskammer 6 in die zweite Verdichtungskammer 11 nach etwa der Hälfte der Hochfahrbewegung schließt das Rückschlagventil 10 aufgrund der umgekehrten Druckverhältnisse wieder. Das höhere Druckniveau des vorverdichteten flüssigen Wasserstoffs und die Einströmungsgeschwindigkeit sorgen für eine schnelle Durchmischung des flüssigen Wasserstoffs und des über Leitung 9 angesaugten Boil-Off-Gases bzw. gasförmigen Wasserstoffs mit dessen anschließender Einkondensation. Die nachfolgende Abwärtsbewegung des Kolbens 4 verdichtet und schiebt den Wasserstoff aus der zweiten Verdichtungskammer 11 über Leitung 8 aus.

Obschon die Erfindung an einer Vorrichtung bzw. einem Pumpeneinsatz P, der zwei Verdichtungskammern aufweist, erläutert wird, ist es für den Fachmann offensichtlich, dass der Erfindungsgedanke auch im Falle von mehr als zwei Verdichtungskammern realisiert werden kann. Gleiches gilt für andere Gase und Gasgemische, die mittels der erfindungsgemäßen Vorrichtung verdichtet werden.

Die erfindungsgemäße Vorrichtung zur Druckerhöhung eines verflüssigten Gases, insbesondere von verflüssigtem Wasserstoff ermöglicht eine wesentliche Reduzierung der Abdampfverluste an Boil-Off-Gas. Während des Pumpenbetriebs kann dem Gesamtsystem mit jedem Kolbenhub eine geringfügige Boil-Off-Gasmenge entnommen und dem der erfindungsgemäßen Vorrichtung nachgeschalteten Hockdrucksystemen einer Wasserstofftankstelle zugeführt werden. Im Falle eines kontinuierlichen Pumpenbetriebs können die Boil-Off-Gas-Verluste dadurch ggf. auf Null reduziert werden. Somit können der Ressourcenverbrauch und die Betriebskosten einer Wasserstofftankstelle deutlich verringert und deren Gesamteffizienz erhöht werden.

## Patentansprüche

1. Vorrichtung zur Druckerhöhung eines verflüssigten Gases, insbesondere von flüssigem Wasserstoff, aufweisend
- einen Pumpenbehälter (B), der wenigstens eine Zuführleitung (1) für das verflüssigte Gas aufweist,
- wobei der Flüssigkeitsstand (2) im Pumpenbehälter (B) und der im Pumpenbehälter (B) herrschende Druck regelbar sind,
- eine Hochdruckleitung (8), über die das verdichtete Gas aus dem Pumpenbehälter (B) abgeführt wird, und
- einen in dem Pumpenbehälter (B) angeordneten, wenigstens zweistufig ausgebildeten Pumpeneinsatz (P),
- dessen Stufen jeweils einen Kolben (4) und jeweils eine Verdichtungskammer (6, 11) aufweisen, und
- wobei die Kolbenbewegungen oszillierend erfolgen,
**dadurch gekennzeichnet, dass**
- in dem Pumpenbehälter (B) eine Leitung (9) angeordnet ist, die den Kopfraum (3) des Pumpenbehälters (B) mit der Verdichtungskammer (6) der ersten Stufe verbindet,
- in der Leitung (9) ein Rückschlagventil (10) angeordnet ist,
- wobei das Rückschlagventil (10) derart ausgebildet ist, dass es öffnet, sobald in der Verdichtungskammer (6), der Druck geringer ist als der im Pumpenbehälter (B) herrschende Druck,
- eine weitere, die Verdichtungskammern (6, 11) verbindende Leitung (19) angeordnet ist,
- in der weiteren Leitung (19) ein Rückschlagventil (5) angeordnet ist, und
- der oder die Kolben (4) über eine gemeinsame Kolbenstange mechanisch bewegt und die Bewegung synchronisiert ist.

2. Vorrichtung nach Anspruch 1, **dadurch gekennzeichnet, dass** der Kolben (4) von einem Hydraulikaggregat und/oder einem Elektromotor angetrieben wird.

3. Vorrichtung nach Anspruch 1 oder 2, **dadurch gekennzeichnet, dass** der Pumpenbehälter (B), die Zuführleitung (1), die Hochdruckleitung (8) und/oder der Pumpeneinsatz (P) gegen die Umgebung thermisch isoliert ausgebildet sind.

4. Vorrichtung nach einem der vorhergehenden Ansprüche, **dadurch gekennzeichnet, dass** der Pumpeneinsatz (P) derart ausgebildet ist, dass er das verflüssigte Gas auf einen Druck bis 1000 bar verdichtet.

5. Wasserstofftankstelle, **dadurch gekennzeichnet, dass** sie wenigstens eine Vorrichtung zur Druckerhöhung eines verflüssigten Gases nach einem der vorhergehenden Ansprüche aufweist.
